(19) **Europäisches Patentamt**
**European Patent Office**
**Office européen des brevets**

(11) **EP 2 245 564 B1**

(12) **EUROPÄISCHE PATENTSCHRIFT**

(45) Veröffentlichungstag und Bekanntmachung des Hinweises auf die Patenterteilung:
**31.08.2011 Patentblatt 2011/35**

(21) Anmeldenummer: **08707471.2**

(22) Anmeldetag: **31.01.2008**

(51) Int Cl.:
***G06F 17/50*** (2006.01)     ***G06F 17/30*** (2006.01)

(86) Internationale Anmeldenummer:
**PCT/EP2008/000784**

(87) Internationale Veröffentlichungsnummer:
**WO 2009/095034 (06.08.2009 Gazette 2009/32)**

(54) **VERFAHREN UND SYSTEM ZUR QUALIFIZIERUNG VON CAD-OBJEKTEN**

METHOD AND SYSTEM FOR QUALIFYING CAD OBJECTS

PROCÉDÉ ET SYSTÈME DE QUALIFICATION D'OBJETS CAO

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(43) Veröffentlichungstag der Anmeldung:
**03.11.2010 Patentblatt 2010/44**

(73) Patentinhaber: **Siemens Aktiengesellschaft**
**80333 München (DE)**

(72) Erfinder: **STOLPER, Thilo**
**90402 Nürnberg (DE)**

(56) Entgegenhaltungen:
**EP-A- 0 088 503     US-A1- 2005 015 169**

• **WARNEKE, HENDRIK: "Anfragebearbeitung in föderierten räumlichen Datenbanksystemen" [Online] 26. April 2006 (2006-04-26), INSTITUT FÜR PRAKTISCHE INFORMATIK, UNIVERSITÄT HANNOVER , HANNOVER, GERMANY , XP007906237 Gefunden im Internet: URL:http://www.dbs.uni-hannover.de/schrift en/theses_world/warneke.pdf> [gefunden am 2008-11-05] Zusammenfassung Seite 15, Absatz 2 - Seite 16, letzter Absatz Seite 30, Absatz 3 - Seite 31, Absatz 4 Seite 41, Absatz 1 - Seite 42, Absatz 1; Tabelle 4.4**
• **ANONYMOUS: "Excerpt: Scanbilder" NEMETSCHEK CAMPUS ALLPLAN/ALLPLOT FT V17 - SCHRITT FÜR SCHRITT PRÄSENTATION, Mai 2002 (2002-05), Seiten 162-174, XP007906230 Munich, Germany**

EP 2 245 564 B1

**Beschreibung**

Die Erfindung betrifft ein Verfahren sowie ein CAx System zur automatischen Identifikation eines CAD Objektes, welches einer Komponente zugeordnet ist, die bereits in einem anderen CAx System durch ein weiteres CAD Objekt repräsentiert wird und der bereits in diesem anderen CAx System ein Datensatz zugeordnet ist. Die Abkürzung CAx steht wie allgemein üblich für sämtlich "Computer Aided" Systeme. Das "x" stellt also einen Platzhalter dar. Bei den besagten CAx Systemen handelt es sich beispielsweise um CAD oder CAE Systeme. Die Abkürzung CAD steht wie allgemein üblich für "Computer Aided Design" und bezeichnet die rechnergestützte Konstruktion. Somit bezeichnen CAD Systeme grafisch orientierte Computer programme, mit denen sich zwei- oder dreidimensionale Layouts herstellen lassen. Der Begriff CAE steht stellvertretende für "Computer Aided Engineering" und bezeichnet die rechnergestützte Entwicklung. Der Begriff ist ähnlich zu verstehen wie Computer Aided Design, welches ein Teil des CAE ist. Zusätzlich zur Modellierung und Konzeption beinhaltet CAE aber auch fortschrittliche Analysen, Simulationen vieler physikalischer Vorgänge oder Optimierungswerkzeuge. Unter dem Begriff "Qualifizierung" ist hier sowie im gesamten Dokument ganz allgemein die Zuordnung eines Datensatzes zu einem CAD Objekt innerhalb eines CAx Systems zu verstehen.

Insbesondere im Bereich der digitalen Produkt- und Fabrikplanung ist der Einsatz von CAD, CAE oder CAM (Computer Aided Manufacturing) Programmen weit verbreitet. Bei der Planung, Fertigung bis hin zu eventuell anfallenden Instandhaltungsaufgaben wird versucht, den Lebenszyklus eines Produktes über seinen kompletten Lebenszyklus datentechnisch zu begleiten. Hierbei wird ein ganzheitlicher Ansatz angestrebt, bei dem von der Planung, Realisierung, Steuerung und den laufenden Verbesserungen aller wesentlichen Fabrikprozesse und Ressourcen in Verbindung mit dem Produkt eine möglichst einheitliche Datenhaltung angestrebt wird.

Häufig werden jedoch bei einer digitalen Produkt- oder Fertigungsplanung verschiedene CAx Entwicklungsumgebungen eingesetzt, in denen dieselben realen, physikalischen Komponenten modelliert sind. So kann beispielsweise ein industrielles Automatisierungssystem mit seinen Komponenten zum Einen in einem CAD System zur Planung des mechanischen Layouts modelliert werden. Dasselbe System findet sich u.U. aber auch in einen weiteren CAD System durch ein entsprechendes CAD Objekt nachgebildet, das zur Planung der Elektrik und Elektronik des Automatisierungssystems eingesetzt wird - einem sogenannten ECAD System. In beiden CAD Systemen werden die Automatisierungskomponenten des Automatisierungssystems durch CAD Objekte repräsentiert. Ebenso kann es vorkommen, dass ein und dasselbe physikalische System mit seinen Komponenten in zwei verschiedenen CAD Entwicklungsumgebungen modelliert ist, die für die gleiche Disziplin vorgesehen sind, jedoch von unterschiedlichen Herstellern oder unterschiedlichen Versionen stammen. Eine solche Situation könnte beispielsweise dann auftreten, wenn eine in einem Unternehmen eingesetzte CAD Software gewechselt wird und für eine Planung maßgebliche Daten noch in dem Altsystem hinterlegt sind.

Im Sinne einer einheitlichen Datenverwaltung insbesondere im Zusammenhang mit der digitalen Fabrik ist es erstrebenswert, dass CAD Objekte verschiedener CAx Systeme, die dieselbe reale Komponente beschreiben, auf gleiche Datensätze zugreifen. Hierfür notwendige Verknüpfungen zwischen den CAD Objekten und den jeweils gemeinsamen Datensätzen können händisch von einem Benutzer eingerichtet werden.

In der Veröffentlichung "Anfragebearbeitung in föderierten räumlichen Datenbanksystemen", Hendrik Warneke, Masterarbeit, 26. April 2006, Universität Hannover, ist bereits ein Möglichkeit der Abbildungen von Datensätzen, insbesondere räumlicher Daten, zweier Datenbanken aufgezeigt. In der beschriebenen Lösung wird eine sogenannte Passpunkt-Tabelle vorab angelegt, welche die Abbildungsvorschrift vorgibt.

Da dies jedoch sehr zeitaufwendig ist, liegt der Erfindung die Aufgabe zugrunde, einen Benutzer mehrerer CAx Systeme, die gleiche Systemkomponenten beschreiben, die Einrichtung einer gemeinsamen Datenbasis zu erleichtern.

Diese Aufgabe wird durch ein Verfahren gelöst, zur automatischen Identifikation eines ersten CAD Objektes innerhalb eines ersten n-dimensionalen CAx Systems und zur automatischen Zuordnung eines Datensatzes zu dem identifizierten ersten CAD Objekt, wobei das erste CAD Objekt eine Komponente darstellt, die bereits in einem zweiten, m-dimensionalen CAx System durch ein zweites CAD Objekt repräsentiert ist und der bereits innerhalb des zweiten CAx Systems besagter Datensatz zugeordnet ist, mit folgenden Verfahrensschritten:

- Ermittlung von m weiteren Komponenten, wobei jeder dieser m weiteren Komponenten ein weiteres erstes CAD Objekt im ersten CAx System mit jeweils einem weiteren Datensatz und ein weiteres zweites CAD Objekt im zweiten CAx System mit jeweils demselben weiteren Datensatz zugeordnet ist,

- Bestimmung einer allgemeingültigen eineindeutigen Abbildungsvorschrift, die für jede der m weiteren Komponenten einen Punkt des weiteren zweiten CAD Objektes auf einen Punkt des zugehörigen ersten weiteren CAD Objektes abbildet,

- Anwendung der Abbildungsvorschrift auf einen zweiten Punkt des zweiten CAD Objektes zur Bestimmung eines ersten Punktes und zur Identifikation eines den ersten Punkt aufweisenden Zielobjektes als das erste CAD Objekt und

- Zuordnung des Datensatzes zum ersten CAD Objekt.

Weiterhin wird die Aufgabe durch ein System zur automatischen Identifikation eines ersten CAD Objektes innerhalb eines ersten m-dimensionalen CAx Systems und zur automatischen Zuordnung eines Datensatzes zu dem identifizierten ersten CAD Objekt gelöst, wobei das erste CAD Objekt eine Komponente darstellt, die bereits in einem zweiten, m-dimensionalen CAx System durch ein zweites CAD Objekt repräsentiert ist und der bereits innerhalb des zweiten Systems besagter Datensatz zugeordnet ist, wobei das System folgenden Mittel aufweist:

- Mittel zur Ermittlung von m weiteren Komponenten, wobei jeder dieser m weiteren Komponenten ein weiteres erstes CAD Objekt im ersten CAx System mit jeweils einem weiteren Datensatz und ein weiteres zweites CAD Objekt im zweiten CAx System mit jeweils demselben weiteren Datensatz zugeordnet ist,
- Mittel zur Bestimmung einer allgemeingültigen eineindeutigen Abbildungsvorschrift, die für jede der m weiteren Komponenten einen Punkt des weiteren zweiten CAD Objektes auf einen Punkt des zugehörigen ersten weiteren CAD Objektes abbildet,
- Mittel zur Anwendung der Abbildungsvorschrift auf einen zweiten Punkt des zweiten CAD Objektes zur Bestimmung eines ersten Punktes und zur Identifikation eines den ersten Punkt aufweisenden Zielobjektes als das erste CAD Objekt und
- Mittel zur Zuordnung des Datensatzes zum ersten CAD Objekt.

Ein derartiges System ist als Systemkomponente einer Softwareentwicklungsumgebung zur digitalen Fabrikplanung vorstellbar, also insbesondere auch als eine CAE Systemkomponente.

Vorteilhafte Ausgestaltungen der Erfindung ergeben sich aus den abhängigen Patentansprüchen.

Der Erfindung liegt die Situation zugrunde, dass zwei insbesondere CAD oder CAE Systeme gleiche Komponenten jeweils durch CAD Objekte modellieren Diese CAD Objekte sind bereits im zweiten CAx System mit Datensätzen qualifiziert, die als Datenbasis für die reinen Grafikobjekte anzusehen sind. Im einfachsten Fall handelt es sich bei einem solchen Datensatz lediglich um eine Bezeichnung, über die ein CAD Objekt einer realen Komponente zugeordnet ist.

Die Menge der im ersten CAx System abgelegten CAD Objekte ist hingegen nicht vollständig qualifiziert. Lediglich m Komponenten des zu modellierenden Systems müssen in beiden CAx Systemen mit einem entsprechenden Datensatz qualifiziert sein, um die Qualifizierung der verbliebenen Komponenten im ersten CAx System, die noch nicht einem Datensatz zugeordnet sind, zu automatisieren. m bezeichnet hierbei die Anzahl der vom zweiten CAx System modellierbaren Freiheitsgrade, also in der Regel zwei oder drei. Handelt es sich bei dem zweiten CAx System beispielsweise um ein dreidimensionales CAE oder CAD Modellierungstool, so reicht es, dass drei Komponenten sowohl im ersten als auch im zweiten CAx System mit einem Datensatz qualifiziert sind.

Ein CAD Objekt des zweiten CAx Systems, das dieselbe Komponente beschreibt wie ein CAD Objekt des ersten CAx Systems und dem folglich der gleiche Datensatz zugeordnet ist, lässt sich mit Hilfe einer linearen Abbildung auf das entsprechende CAD Objekt im ersten CAx System projizieren. Im Falle eines dreidimensionalen zweiten CAx System kann eine lineare Abbildung, die für jede der drei weiteren Komponenten einen Punkt eines CAD Objektes im zweiten CAx System auf einen Punkt des CAD Objektes im ersten CAx System abbildet, welches die gleiche Komponente beschreibt, als allgemein gültig verstanden werden. D.h., diese Abbildungsvorschrift kann nun auch auf die CAD Objekte angewendet werden, denen lediglich im zweiten CAx System ein Datensatz zugeordnet ist, jedoch noch nicht im ersten CAx System. Wendet man diese Abbildungsvorschrift auf einen Punkt eines CAD Objektes im zweiten CAx System an, dem im ersten CAx System noch kein Datensatz zugeordnet ist, so resultiert aus der Abbildungsvorschrift ein Punkt eines CAD Objektes im ersten CAx System, welches zwangsläufig dieselbe Komponente beschreibt. Somit ist das Zielobjekt identifiziert und der Datensatz des zugrundeliegenden CAD Objektes im zweiten CAx System kann auch ihm automatisch zugeordnet werden.

Die Anzahl der Komponenten, die zur Bestimmung einer allgemeinen Abbildungsvorschrift verwendet werden müssen, hängt von der Dimension des CAD Systems ab, in dem sämtliche CAD Objekte qualifiziert sind. Bei einem dreidimensionalen zweiten CAx System müssen mindestens drei Komponenten hierzu verwendet werden, bei einen zweidimensionalen System reichen hingegen zwei Komponenten aus.

In vorteilhafter Ausgestaltung der Erfindung sind erstes und zweites CAx System CAD Systeme. In diesen CAx Systemen sind die CAD Objekte direkt über Koordinaten eines 2 oder 3 dimensionalen Koordinatensystems definiert.

Alternativ kann auch mindestens eines der CAx Systeme ein CAE System darstellen, bei dem die CAD Objekte zum Beispiel aus einer CAD Entwicklungsumgebung importiert werden um beispielsweise eine Simulation auf Grundlage der importieren Objekte zu ermöglichen. Auch die importierten Objekte können im CAE System durch Koordinaten im 2 bzw. 3-dimensionalen Raum positioniert werden.

Zur vorteilhaften Ausgestaltung der Erfindung weist der Datensatz eine zur Adressierung des zweiten CAD Objektes verwendete Bezeichnung auf. Dies ist insbesondere dann vorteilhaft, wenn in weiterer Ausgestaltung der Erfindung das erste und zweite CAD Objekt über die Bezeichnung von einem dem ersten und zweiten CAx System übergeordneten Engineeringsystem adressiert werden. Auf diese Art und Weise ist sichergestellt, dass ein und dieselbe Komponente systemunabhängig durch den gleichen Bezeichner adressiert werden kann.

Eine weitere vorteilhafte Ausgestaltung der Erfindung ist dadurch gekennzeichnet, dass der Datensatz von einem Produktmanagementsystem verwaltet wird. Ein derartiges Produktdatenmanagementsystem stellt sicher, dass das erste und zweite CAD Objekt nach der Qualifizierung auf dieselbe Datenbasis zugreift. Dies hat zur Konsequenz, dass eine Änderung des CAD Objektes im ersten CAx System Auswirkungen auf das zweite CAD Objekt im zweiten CAx System hat, wenn sich diese Änderung im den CAD Objekten zugeordneten Datensatz wiederfindet. Auf diese Art und Weise werden Inkonsistenzen zwischen den Daten der CAD Objekte vermieden.

In weiterer vorteilhafter Ausgestaltung der Erfindung enthält der Datensatz Konfigurationsdaten für das erste CAD Objekt, wobei diese Konfigurationsdaten zur automatischen Konfiguration des ersten CAD Objektes verwendet werden. Somit können nicht nur die Identifikation des ersten CAD Objektes und die Zuordnung des Datensatzes automatisiert werden, sondern auch eine anschließende Konfiguration des ersten CAD Objektes automatisch mit den Daten durchgeführt werden, die auch schon zur Konfiguration des ersten CAD Objektes verwendet wurden.

Bei einer weiteren vorteilhaften Ausführungsform der Erfindung sind die Dimensionen der beteiligten CAx Systeme gleich, d.h. m=n=2 oder m=n=3. Alternativ kann aber auch eine Ausgestaltung der Erfindung vorteilhaft sein, bei der m ungleich n gilt. Beispielsweise kann ein und dasselbe System mit ein und denselben Komponenten sowohl durch ein dreidimensionales CAD System zur Planung des mechanischen Layouts modelliert sein, als auch in einen zweidimensionalen CAE System, welches als GUI für eine Simulationssystem zur Untersuchung regelungstechnischer Fragestellungen verwendet wird.

Die CAD Objekte werden innerhalb der Systeme grafisch durch sogenannte Hüllgeometrien modelliert. Eine beispielhafte vorteilhafte Ausführungsform der Erfindung kennzeichnet sich daher dadurch, dass die Punkte der m weiteren ersten und zweiten CAD Objekte jeweils Mittelpunkte von den weiteren CAD Objekten zugehörigen Hüllgeometrien sind. Insbesondere kann die Abbildungsvorschrift derart gestaltet sein, dass Mittelpunkte der CAD Objekte des ersten CAx Systems jeweils auf Mittelpunkte von Elementen des zweiten CAx Systems abgebildet werden und umgekehrt. Hingegen fordert eine Ausführung eine geringere Anforderung an die Abbildungsvorschrift, bei der beliebige Punkte der CAD Objekte des ersten und zweiten CAx Systems aufeinander abgebildet werden.

Im Folgenden wird die Erfindung anhand der in den Figuren dargestellten Ausführungsbeispiele näher beschrieben und erläutert.

Es zeigen:

FIG 1 eine Qualifizierung eines ersten CAD Objektes in ei- nem ersten 3-dimensionalen CAx System mit einem Da- tensatz, mit dem bereits ein zweites CAD Objekt in einem zweiten 3-dimensionalen CAx System qualifiziert ist,

FIG 2 eine Qualifizierung eines ersten CAD Objektes in ei- nem ersten 3-dimensionalen CAx System mit einem Da- tensatz, mit dem bereits ein zweites CAD Objekt in einem zweiten 2-dimensionalen CAx System qualifiziert ist und

FIG 3 eine Qualifizierung eines ersten CAD Objektes in ei- nem ersten 2-dimensionalen CAx System mit einem Da- tensatz, mit dem bereits ein zweites CAD Objekt in einem zweiten 3-dimensionalen CAx System qualifiziert ist.

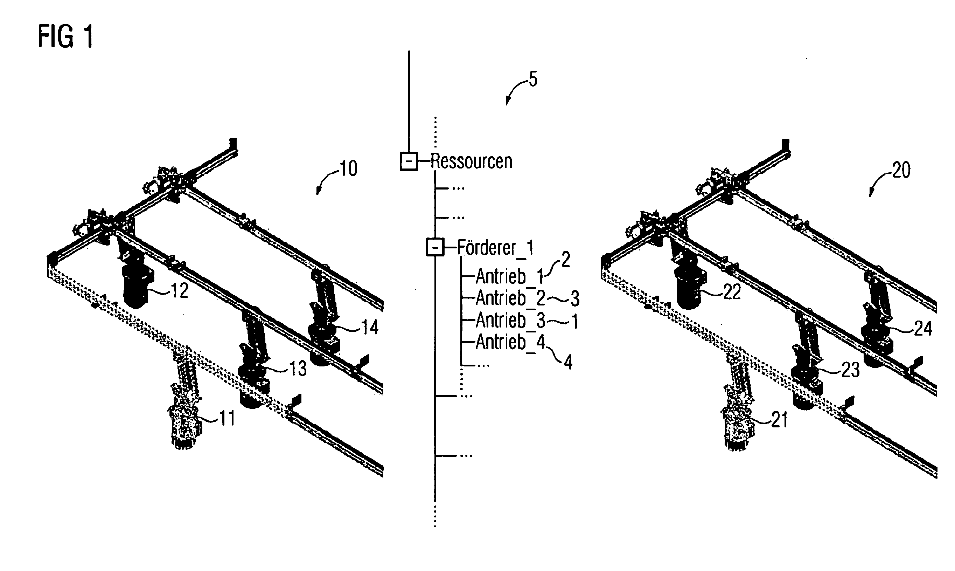

FIG 1 zeigt eine Qualifizierung eines ersten CAD Objektes 11 in einem ersten dreidimensionalen CAx System 10 mit einem Datensatz 1, mit dem bereits ein zweites CAD Objekt 21 in einem zweiten dreidimensionalen CAx System 20 qualifiziert ist. Bei den beiden CAx Systemen 10,20 handelt es sich um CAD Systeme. Das erste und zweite CAD System 10,20 werden in dem dargestellten Anwendungsbeispiel zur digitalen Planung eines industriellen Fertigungssystems eingesetzt. Dargestellt sind jeweils Komponenten eines Fördersystems, welches zur Förderung von automatisiert zu fertigenden Produkten eingesetzt wird. In beiden CAD Systemen 10,20 werden die Komponenten des Automatisierungssystems durch dreidimensionale Hüllgeometrien modelliert.

Obwohl die dargestellten CAD Modelle auf den ersten Blick gleich aussehen, handelt es sich jedoch um unterschiedliche CAD Systeme mit unterschiedlichen Aufgaben. So ist im ersten CAD System 10 eine Modellierung der Anlage vorgenommen worden, um Simulationsergebnisse einer Simulation des Automatisierungsprozesses für einen Benutzer sehr anschaulich zu visualisieren. Hingegen dient das zweite CAD System 20 zur mechanischen Layoutplanung des Automatisierungssystems. Entsprechend stecken in dem zweiten CAD System 20 sehr viel mehr Informationen für die einzelnen zu modellierenden Systemkomponenten, als es in dem ersten CAD System 10 der Fall ist. Das erste CAD System 10 kann auf eine abgespeckte Variante der Datenmodelle zugreifen, die im zweiten CAD System 20 verwendet werden.

Zur einheitlichen Datenhaltung wird ein Produktdatenmanagementsystem 5 verwendet. Innerhalb dieses Produktdatenmanagementsystems 5 werden Datensätze 1..4 verwaltet, auf die beide CAD Systeme 10,20 Zugriff haben. Den einzelnen Komponenten des Automatisierungssystems, die auch als Ressourcen bezeichnet werden, sind diese Datensätze 1,2,3,4 zugeordnet. Die CAD Objekte 21,22,23,24, die im zweiten CAD System 20 zur Modellierung dieser Ressourcen angelegt sind, sind bereits mit den entsprechenden Datensätzen 1,2,3,4 qualifiziert. Innerhalb des ersten CAD Systems 10 ist ein erstes CAD Objekt 11 hingegen noch nicht mit dem entsprechenden Datensatz 1 qualifiziert. Jedoch finden sich auch im ersten CAD System 10 drei weitere Komponenten, die durch weitere CAD Objekte 12,13,14 modelliert werden, wobei diese weiteren ersten CAD Objekte 12,13,14 bereits mit weiteren Datensätzen 2,3,4 qualifiziert sind. Zusammengefasst existieren also mindestens drei Komponenten des Automatisierungssystems, die in beiden CAD Systemen 10,20 qualifiziert sind. Diese drei Komponenten reichen aus, um eine allgemeine Transformationsvorschrift zu bestimmen, mit der sich für jedes CAD Objekt 21,22,23,24 des zweiten CAD Systems 20 die Koordinaten eines CAD Objektes 11,12, 13,14 innerhalb des ersten CAD Systems 10 berechnen lassen, welches dieselbe Komponente des Automatisierungssystems beschreibt. Bei dieser Transformationsvorschrift handelt es sich um eine lineare Abbildung, die der folgenden Formel folgt:

$$\begin{pmatrix} A_1 \\ A_2 \\ A_3 \end{pmatrix} = \begin{pmatrix} x_{11} & x_{12} & x_{13} \\ x_{21} & x_{22} & x_{23} \\ x_{31} & x_{32} & x_{33} \end{pmatrix} \cdot \begin{pmatrix} B_1 \\ B_2 \\ B_3 \end{pmatrix}$$

Mit den Koordinaten $A_1$-$A_3$ ist hierbei ein Punkt eines CAD Objektes 11,12,13,14 des ersten CAD Systems 10 gemeint und mit den Koordinaten $B_1$-$B_3$ ein Punkt eines CAD Objektes 21,22,23, 24 innerhalb des zweiten CAD Systems 20. Aus den bekannten drei Komponenten Antrieb_1, Antrieb_2 und Antrieb_4 4 lässt sich nun die Abbildungsmatrix X bestimmen. Hierzu muss lediglich ein entsprechendes Gleichungssystem mit den aus der linearen Algebra bekannten Methoden gelöst werden.

Für die Koordinaten der weiteren Komponenten, die bereits zu Beginn des Verfahrens in beiden CAD Systemen 10 ,20 qualifiziert sind, können jeweils die Mittelpunkte der den CAD Objekten 12,13,19,22,23,24 zugehörigen Hüll geometrien verwendet werden. Werden diese Punkte für jedes bereits qualifizierte CAD Objekt 12,13,14,22,23,24 bei der Aufstellung des zu lösenden Gleichungssystems eingesetzt, so erhält man eine Transformationsmatrix X, mit der sich Mittelpunkte noch nicht qualifizierter CAD Objekte 11 des ersten CAD Systems 10 aus den Mittelpunkten der zugehörigen CAD Objekte 21 des zweiten CAD Systems 20 berechnen lassen. Durch diese Berechnung können die CAD Objekte im ersten CAD System 10 identifiziert und anschließend qualifiziert werden.

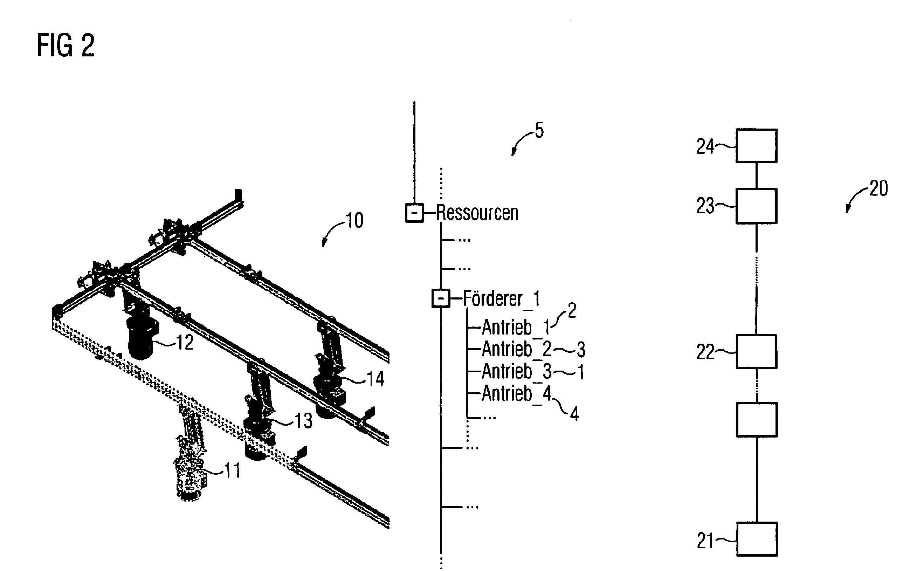

FIG 2 zeigt eine Qualifizierung eines ersten CAD Objektes 11 in einem ersten dreidimensionalen CAD System 10 mit einem Datensatz 1, mit dem bereits ein zweites CAD Objekt 21 in einem zweiten zweidimensionalen CAD System 20 qualifiziert ist. Bei den beiden CAx Systemen 10,20 handelt es sich um CAD Systeme. In dem hier dargestellten Beispiel ist das zweite CAD System 20, in dem sämtliche CAD Objekte 21-24 bereits mit Datensätzen 1,2,3,4 qualifiziert sind, ein zweidimensionales CAD System, welches lediglich zur schematischen Anordnung der zugehörigen Komponenten vorgesehen ist, um eine Regelungsstrategie zu entwerfen und zu simulieren. Auch hier wird analog zu dem Fall aus FIG 1 angenommen, dass ein erstes CAD Objekt 11 des ersten CAD Systems 10 noch nicht mit dem Datensatz 1 qualifiziert wurde, mit dem bereits ein zweites CAD Objekt 21 des zweiten CAD Systems 20 qualifiziert wurde. Hingegen sind drei weitere Komponenten bereits sowohl im ersten als auch im zweiten CAD Systems 10,20 mit den entsprechenden weiteren Datensätzen 2,3,4 qualifiziert.

Auch hier gilt es zunächst, eine allgemeine Abbildungsvorschrift zu bestimmen, die Punkte von CAD Objekten 21,22,23,24 des zweiten CAD Systems 20 auf Punkte von CAD Objekten 11,12, 13,14 des ersten CAD Systems 10 abbildet, die gleiche Komponenten beschreiben bzw. die mit gleichen Datensätzen 1,2,3,4 qualifiziert werden sollen. Die entsprechende Abbildungsvorschrift folgt der folgenden Gleichung, wobei $A_1$-$A_3$ wieder die Koordinaten eines Punktes im ersten CAD System beschreiben und $B_1$- $B_2$ für Koordinaten eines Punktes im zweiten CAD System 20 stehen:

$$\begin{pmatrix} A_1 \\ A_2 \\ A_3 \end{pmatrix} = \begin{pmatrix} x_{11} & x_{12} \\ x_{21} & x_{22} \\ x_{31} & x_{32} \end{pmatrix} \cdot \begin{pmatrix} B_1 \\ B_2 \end{pmatrix}$$

Zur Lösung dieses Gleichungssystems sind wieder mindestens drei weitere Komponenten notwendig, die in beiden CAD Systemen 10,20 qualifiziert sind. Auf diese Art und Weise erhält man sechs Gleichungen, die zur Lösung der unbekannten $X_{11}, X_{12}, X_{21}, X_{22}, X_{31}, X_{32}$ verwendet werden können.

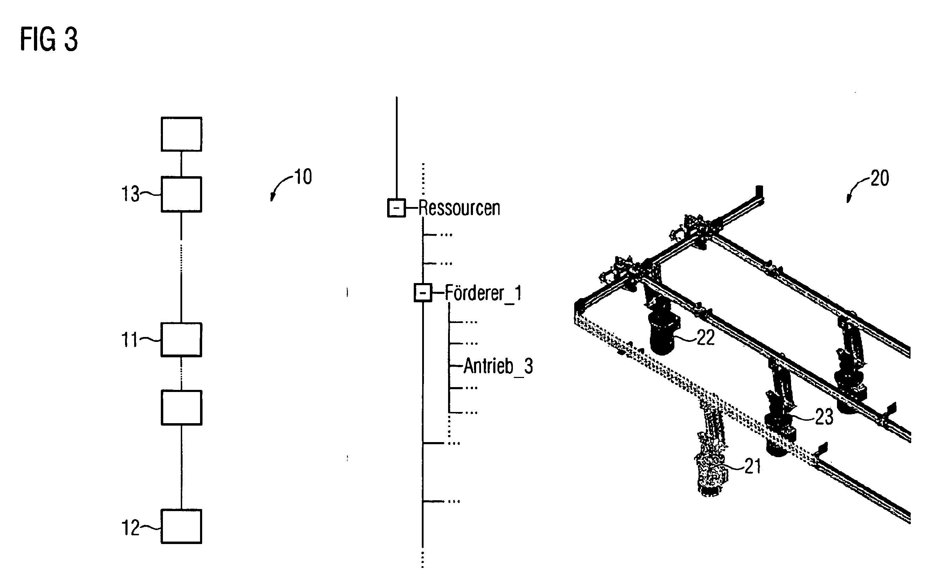

Schließlich zeigt FIG 3 eine Qualifizierung eines ersten CAD Objektes 11 in einem ersten zweidimensionalen CAD System 10 mit einem Datensatz 1, mit dem bereits ein zweites CAD Objekt 21 in einem zweiten dreidimensionalen CAD System 20 qualifiziert ist. Bei den beiden CAx Systemen 10,20 handelt es sich wieder um CAD Systeme. Hier sei nun der umgekehrte Fall von dem in FIG 2 dargestellten Anwendungsfall angenommen. D.h., sämtliche Komponenten des zu modellierenden Automatisierungssystems sind in dem dreidimensionalen zweiten CAD System 20 qualifiziert. In dem ersten CAD System 10 hingegen sind lediglich zwei Komponenten des Automatisierungssystems bereits qualifiziert. Eine allgemeine Abbildungsvorschrift lässt sich durch die nachstehende Gleichung angeben, wobei $A_1$-$A_2$ wieder die Koordinaten eines Punktes im ersten CAD System beschreiben und $B_1$- $B_3$ für Koordinaten eines Punktes im zweiten CAD System 20 stehen:

$$\begin{pmatrix} A_1 \\ A_2 \end{pmatrix} = \begin{pmatrix} x_{11} & x_{12} & x_{13} \\ x_{21} & x_{22} & x_{23} \end{pmatrix} \cdot \begin{pmatrix} B_1 \\ B_2 \\ B_3 \end{pmatrix}$$

Diese Abbildungsvorschrift zeigt, dass hier nur zwei Komponenten notwendig sind, die in beiden CAD Systemen 10,20 qualifiziert sind, um die sechs unbekannten Matrixkomponenten zu berechnen.

Zusammenfassend betrifft die Erfindung ein Verfahren und ein System zur automatischen Qualifizierung von CAD Objekten in zwei verschiedenen CAx Systemen, wobei die CAD Objekte jeweils Komponenten eines physikalischen Systems modellieren. Um CAD Objekte in den CAx Systemen, die gleiche Systemkomponenten beschreiben, mit den gleichen Datensätzen automatisch zu qualifizieren, wird zunächst eine allgemeingültige Abbildungsvorschrift anhand von Systemkomponenten bestimmt, die in beiden CAx Systemen mit Datensätzen qualifiziert sind. Diese Abbildungsvorschrift wird anschließend auf CAD Objekte angewandt, die lediglich in einem CAx System mit einem Datensatz qualifiziert sind, um jeweils ein CAD Objekt in dem anderen CAx System zu identifizieren, das die gleiche Systemkomponente darstellt und daher mit dem gleichen Datensatz qualifiziert werden soll.

**Patentansprüche**

1. Verfahren zur automatischen Identifikation eines ersten CAD Objektes (11) innerhalb eines ersten n-dimensionalen CAx Systems (10) und zur automatischen Zuordnung eines Datensatzes (1) zu dem identifizierten ersten CAD Objekt (11), wobei das erste CAD Objekt (11) eine Komponente darstellt, die bereits in einem zweiten, m-dimensionalen CAx System (20) durch ein zweites CAD Objekt (21) repräsentiert ist und der bereits innerhalb des zweiten CAx Systems (20) besagter Datensatz (1) zugeordnet ist, mit folgenden Verfahrensschritten:

   - Ermittlung von n weiteren Komponenten, wobei jeder dieser n weiteren Komponenten ein weiteres erstes CAD Objekt (12,13,14) im ersten CAx System (10) mit jeweils einem weiteren Datensatz (2,3,4) und ein weiteres zweites CAD Objekt (22,23,24) im zweiten CAx System (20) mit jeweils demselben weiteren Datensatz (2,3,4) zugeordnet ist,
   - Bestimmung einer allgemeingültigen eineindeutigen Abbildungsvorschrift, die für jede der n weiteren Komponenten einen Punkt des weiteren zweiten CAD Objektes (22,23,24) auf einen Punkt des zugehörigen ersten weiteren CAD Objektes (12,13,14) abbildet,

   - Anwendung der Abbildungsvorschrift auf einen zweiten Punkt des zweiten CAD Objektes (21) zur Bestimmung eines ersten Punktes und zur Identifikation eines den ersten Punkt aufweisenden Zielobjektes als das erste CAD Objekt (11) und
   - Zuordnung des Datensatzes (1) zum ersten CAD Objekt (11).

2. Verfahren nach Anspruch 1, wobei erstes und zweites CAx System (10,20) CAD Systeme sind.

3. Verfahren nach Anspruch 1, wobei mindestens eines der CAx Systeme (10,20) ein CAE System ist.

4. Verfahren nach einem der vorhergehenden Ansprüche, wobei der Datensatz (1) eine zur Adressierung des zweiten CAD Objektes (21) verwendete Bezeichnung aufweist.

5. Verfahren nach Anspruch 4, wobei das erste und zweite CAD Objekt (11,12) über die Bezeichnung von einem dem ersten und zweiten CAx System (10,20) übergeordneten Engineeringsystem adressiert werden.

6. Verfahren nach einem der vorhergehenden Ansprüche, wobei der Datensatz (1) von einem Produktdatenmanagementsystem (5) verwaltet wird.

7. Verfahren nach einem der vorhergehenden Ansprüche, wobei der Datensatz (1) Konfigurationsdaten für das erste CAD Objekt (11) enthält und die Konfigurationsdaten zur automatischen Konfiguration des ersten CAD Objektes (11) verwendet werden.

8. Verfahren nach einem der vorhergehenden Ansprüche, wobei m = n = 2 oder m = n = 3 gilt.

9. Verfahren nach einem der Ansprüche 1 bis 7, wobei m ungleich n gilt.

10. Verfahren nach einem der vorhergehenden Ansprüche, wobei die Punkte der m weiteren ersten und zweiten CAD Objekte (12,13,14,22,23,24) jeweils Mittelpunkte von den weiteren CAD Objekten (12,13,14,22,23,24) zugehörigen Hüllgeometrien sind.

11. System zur automatischen Identifikation eines ersten CAD Objektes (11) innerhalb eines ersten n-dimensionalen CAx Systems (10) und zur automatischen Zuordnung eines Datensatzes (1) zu dem identifizierten ersten CAD Objekt (11), wobei das erste CAD Objekt (11) eine Komponente darstellt, die bereits in einem zweiten, m-dimensionalen CAx System (20) durch ein zweites CAD Objekt (21) repräsentiert ist und der bereits innerhalb des zweiten CAx Systems (20) besagter Datensatz (1) zugeordnet ist, wobei das System folgenden Mittel aufweist:

- Mittel zur Ermittlung von n weiteren Komponenten, wobei jeder dieser n weiteren Komponenten ein weiteres erstes CAD Objekt (12,13,14) im ersten CAx System (10) mit jeweils einem weiteren Datensatz (2,3,4) und ein weiteres zweites CAD Objekt (22,23,24) im zweiten CAx System (20) mit jeweils demselben weiteren Datensatz (2,3,4) zugeordnet ist,
- Mittel zur Bestimmung einer allgemeingültigen eineindeutigen Abbildungsvorschrift, die für jede der n weiteren Komponenten einen Punkt des weiteren zweiten CAD Objektes (22,23,24) auf einen Punkt des zugehörigen ersten weiteren CAD Objektes (12,13,14) abbildet,
- Mittel zur Anwendung der Abbildungsvorschrift auf einen zweiten Punkt des zweiten CAD Objektes (21) zur Bestimmung eines ersten Punktes und zur Identifikation eines den ersten Punkt aufweisenden Zielobjektes als das erste CAD Objekt (11) und
- Mittel zur Zuordnung des Datensatzes (1) zum ersten CAD Objekt (11).

**12.** System nach Anspruch 11,
wobei erstes und zweites System (10,20) CAD Systeme sind.

**13.** System nach Anspruch 11,
wobei mindestens eines der CAx Systeme (10,20) ein CAE System ist.

**14.** System nach einem der Ansprüche 11 bis 13,
wobei der Datensatz (1) eine zur Adressierung des zweiten CAD Objektes (21) verwendete Bezeichnung aufweist.

**15.** System nach Anspruch 14,
wobei das System als ein dem ersten und zweiten CAx System (10,20) übergeordnetes Engineeringsystem ausgeführt ist, mit dem das erste und zweite CAD Objekt (11,12) über die Bezeichnung adressierbar ist.

**16.** System nach einem der Ansprüche 11 bis 15,
wobei das CAx System als Produktdatenmanagementsystem (5) zur Verwaltung des Datensatzes (1) ausgeführt ist.

**17.** System nach einem der Ansprüche 11 bis 16,
wobei der Datensatz (1) Konfigurationsdaten für das erste CAD Objekt (11) enthält und die Konfigurationsdaten zur automatischen Konfiguration des ersten CAD Objektes (11) vorgehen sind.

**18.** System nach einem der Ansprüche 11 bis 17,
wobei m = n = 2 oder m = n = 3 gilt.

**19.** System nach einem der Ansprüche 11 bis 18,
wobei m ungleich n gilt.

**20.** System nach einem der Ansprüche 11 bis 19,
wobei die Punkte der m weiteren ersten und zweiten CAD Objekte (12,13,14,22,23,24) jeweils Mittelpunkte von den weiteren CAD Objekten (12,13,14,22,23,24) zugehörigen Hüllgeometrien sind.

**Claims**

**1.** Method for automatically identifying a first CAD object (11) within a first n-dimensional CAx system (10) and for automatically assigning a data record (1) to the identified first CAD object (11), wherein the first CAD object (11) represents a component, which is already represented in a second, m-dimensional CAx system (20) by a second CAD object (21) and which is already assigned said data record (1) within the second CAx system (20), having the following method steps:

- determining n further components, each of said n further components being assigned a further first CAD object (12,13,14) in the first CAx system (10) with a further data record (2,3,4) in each instance and a further second CAD object (22,23,24) in the second CAx system (20) with the same further data record (2,3,4) in each instance,
- defining a universal unambiguous mapping rule which for each of the n further components maps a point of the further second CAD object (22,23,24) onto a point of the associated first further CAD object (12,13,14),
- applying the mapping rule to a second point of the second CAD object (21) to define a first point and to identify a target object having the first point as the first CAD object (11) and
- assigning the data record (1) to the first CAD object (11).

**2.** Method according to claim 1,
wherein the first and second CAx systems (10,20) are CAD systems.

**3.** Method according to claim 1,

wherein at least one of the CAx systems (10,20) is a CAE system.

4. Method according to one of the preceding claims, wherein the data record (1) has a designation used to address the second CAD object (21).

5. Method according to claim 4, wherein the first and second CAD objects (11,12) are addressed by way of the designation by an engineering system of a higher order than the first and second CAx systems (10,20).

6. Method according to one of the preceding claims, wherein the data record (1) is managed by a product data management system (5).

7. Method according to one of the preceding claims, wherein the data record (1) contains configuration data for the first CAD object (11) and the configuration data is used for the automatic configuration of the first CAD object (11).

8. Method according to one of the preceding claims, wherein $m = n = 2$ or $m = n = 3$.

9. Method according to one of claims 1 to 7, wherein m is not equal to n.

10. Method according to one of the preceding claims, wherein the points of the m further first and second CAD objects (12,13,14,22,23,24) are respectively centre points of the envelope geometries associated with the further CAD objects (12,13,14,22,23,24).

11. System for automatically identifying a first CAD object (11) within a first n-dimensional CAx system (10) and for automatically assigning a data record (1) to the identified first CAD object (11), wherein the first CAD object (11) represents a component, which is already represented in a second, m-dimensional CAx system (20) by a second CAD object (21) and which is already assigned said data record (1) within the second CAx system (20), the system having the following means:

- means for determining n further components, each of said n further components being assigned a further first CAD object (12,13,14) in the first CAx system (10) with a further data record (2,3,4) in each instance and a further second CAD object (22,23,24) in the second CAx system (20) with the same further data record (2,3,4) in each instance,
- means for defining a universal, unambiguous mapping rule, which for each of the n further components maps a point of the further second CAD object (22,23,24) onto a point of the associated first further CAD object (12,13,14),
- means for applying the mapping rule to a second point of the second CAD object (21) to define a first point and to identify a target object having the first point as the first CAD object (11) and
- means for assigning the data record (1) to the first CAD object (11).

12. System according to claim 11, wherein the first and second systems (10,20) are CAD systems.

13. System according to claim 11, wherein at least one of the CAx systems (10,20) is a CAE system.

14. System according to one of claims 11 to 13, wherein the data record (1) has a designation used to address the second CAD object (21).

15. System according to claim 14, wherein the system is embodied as an engineering system of a higher order than the first and second CAx systems (10,20), which can be used to address the first and second CAD objects (11,12) by way of the designation.

16. System according to one of claims 11 to 15, wherein the CAx system is embodied as a product data management system (5) to manage the data record (1).

17. System according to one of claims 11 to 16, wherein the data record (1) contains configuration data for the first CAD object (11) and the configuration data is provided for the automatic configuration of the first CAD object (11).

18. System according to one of claims 11 to 17, wherein $m = n = 2$ or $m = n = 3$.

19. System according to one of claims 11 to 18, wherein m is not equal to n.

20. System according to one of claims 11 to 19, wherein the points of the m further first and second CAD objects (12,13,14,22,23,24) are respectively centre points of envelope geometries associated with the further CAD objects (12, 13, 14, 22, 23, 24) .

**Revendications**

1. Procédé d'identification automatique d'un premier objet CAD (11) dans un premier système CAx (10) à n dimensions et d'association automatique d'un jeu de données (1) au premier objet CAD (11) identifié, le premier objet CAD (11) représentant une composante qui est déjà représentée dans un deuxième système CAx (20) à m dimensions par un deuxième objet CAD (21) et à laquelle ledit jeu de données (1) est déjà associé dans le deuxième système CAx (20), comportant les étapes suivantes :

- détermination de n autres composantes, à chacune de ces n autres composantes étant associés un autre premier objet CAD (12, 13, 14) dans le premier système CAx (10) avec respectivement un autre jeu de données (2, 3, 4) et un autre deuxième objet CAD (22, 23, 24) dans le deuxième système CAx (20) avec respectivement le même autre jeu de données (2, 3, 4) ;
- définition d'une règle d'application biunivoque universelle qui, pour chacune des n autres composantes, applique un point de l'autre deuxième objet CAD (22, 23, 24) sur un point du premier autre objet CAD (12, 13 ,14) associé ;
- application de la règle d'application à un deuxième point du deuxième objet CAD (21) pour déterminer un premier point et pour identifier comme étant le premier objet CAD (11) un objet cible qui comporte le premier point ; et
- association du jeu de données (1) au premier objet CAD (11).

2. Procédé selon la revendication 1, le premier et le deuxième système CAx (10, 20) étant des systèmes CAD.

3. Procédé selon la revendication 1, au moins l'un des systèmes CAx (10, 20) étant un système CAE.

4. Procédé selon l'une des revendications précédentes, le jeu de données (1) comportant une désignation utilisée pour l'adressage du deuxième objet CAD (21).

5. Procédé selon la revendication 4, le premier et le deuxième objet CAD (11, 12) étant adressés par l'intermédiaire de la désignation par un système d'ingénierie supérieur au premier et au deuxième système CAx (10, 20).

6. Procédé selon l'une des revendications précédentes, le jeu de données (1) étant géré par un système de gestion de données produits (5).

7. Procédé selon l'une des revendications précédentes, le jeu de données (1) contenant des données de configuration pour le premier objet CAD (11) et les données de configuration étant utilisées pour la configuration automatique du premier objet CAD (11).

8. Procédé selon l'une des revendications précédentes, avec m = n = 2 ou m = n = 3.

9. Procédé selon l'une des revendications 1 à 7, avec m différent de n.

10. Procédé selon l'une des revendications précédentes, les points des m autres premiers et deuxièmes objets CAD (12, 13, 14, 22, 23, 24) étant respectivement des points centraux de géométries enveloppantes associées aux autres objets CAD (12, 13, 14, 22, 23, 24).

11. Système d'identification automatique d'un premier objet CAD (11) dans un premier système CAx (10) à n dimensions et d'association automatique d'un jeu de données (1) au premier objet CAD (11) identifié, le premier objet CAD (11) représentant une composante qui est déjà représentée dans un deuxième système CAx (20) à m dimensions par un deuxième objet CAD (21) et à laquelle ledit jeu de données (1) est déjà associé dans le deuxième système CAx (20), le système comportant les moyens suivantes :

- moyen pour déterminer n autres composantes, à chacune de ces n autres composantes étant associés un autre premier objet CAD (12, 13, 14) dans le premier système CAx (10) avec respectivement un autre jeu de données (2, 3, 4) et un autre deuxième objet CAD (22, 23, 24) dans le deuxième système CAx (20) avec respectivement le même autre jeu de données (2, 3, 4) ;
- moyen pour définir une règle d'application biunivoque universelle qui, pour chacune des n autres composantes, applique un point de l'autre deuxième objet CAD (22, 23, 24) sur un point du premier autre objet CAD (12, 13 ,14) associé ;
- moyen pour appliquer la règle d'application à un deuxième point du deuxième objet CAD (21) pour déterminer un premier point et pour identifier comme étant le premier objet CAD (11) un objet cible qui comporte le premier point ; et
- moyen pour associer le jeu de données (1) au premier objet CAD (11).

12. Système selon la revendication 11, le premier et le deuxième système (10, 20) étant des systèmes CAD.

13. Système selon la revendication 11, au moins l'un des systèmes CAx (10, 20) étant un système CAE.

14. Système selon l'une des revendications 11 à 13, le jeu de données (1) comportant une désignation utilisée pour l'adressage du deuxième objet CAD (21).

15. Système selon la revendication 14, le système étant réalisé sous la forme d'un système d'ingénierie supérieur au premier et au deuxième système CAx (10, 20) et au moyen duquel le premier et le deuxième objet CAD (11, 12) sont adressables par l'intermédiaire de la désignation.

16. Système selon l'une des revendications 11 à 15, le système CAx étant réalisé sous la forme d'un système de gestion de données produit (5) pour gérer le jeu de données (1).

17. Système selon l'une des revendications 11 à 16, le jeu de données (1) contenant des données de configuration pour le premier objet CAD (11) et les données de configuration étant prévues pour la configuration automatique du premier objet CAD (11).

18. Système selon l'une des revendications 11 à 17, avec m = n = 2 ou m = n = 3.

19. Système selon l'une des revendications 11 à 18, avec m différent de n.

20. Système selon l'une des revendications 11 à 19, les points des m autres premiers et deuxièmes objets CAD (12, 13, 14, 22, 23, 24) étant respectivement des points centraux de géométries enveloppantes associées aux autres objets CAD (12, 13, 14, 22, 23, 24).

FIG 1

Ressourcen

... 5

...

Förderer_1

Antrieb_1 ⌒ 2
Antrieb_2 ⌒ 3
Antrieb_3 ⌒ 1
Antrieb_4 ⌒ 4
...

EP 2 245 564 B1

FIG 2

EP 2 245 564 B1

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **Hendrik Warneke.** *Anfragebearbeitung in föderierten räumlichen Datenbanksystemen,* 26. April 2006